# EUROPÄISCHE PATENTANMELDUNG

(11) **EP 4 597 339 A1**
(43) Veröffentlichungstag der Anmeldung: **06.08.2025**
(21) Anmeldenummer: 24154932.8
(22) Anmeldetag: 31.01.2024
(51) Int. Cl.: G06F 21/10, G06F 21/44

(54) **VERFAHREN ZUR KOPIERGESCHÜTZTEN WIEDERGABE VON DATEN**

(71) Anmelder: ise Individuelle Software und Elektronik GmbH, 26122 Oldenburg (DE)
(72) Erfinder: EICHENWALD, Tobias, 10997 Berlin (DE); CHRISTMANN, Felix, 10997 Berlin (DE); MICHAELIDES, Philip, 10557 Berlin (DE); DONEIT, Hans-Kristoff, 10245 Berlin (DE); HORNUNG, Dominik, 14057 Berlin (DE); ANDERSEN, Fritz, 10557 Berlin (DE); JENNINGS, Eoghan, 29353 Ahnsbeck (DE); KELADA, Jonathan, 8240 Risskov/Aarhus (DK); CHOUDHARY, Shantanu, Bikaner, Rajasthan, 334004 (IN); SAHM, Christoph, 26131 Oldenburg (DE)
(74) Vertreter: Angerhausen, Christoph

(57) **Zusammenfassung**

Die hier offenbarte Erfindung betrifft Verfahren, umfassend: Einlesen, durch einen Client, eines Tags, der einen eindeutigen Bezeichner enthält; Übermitteln des eindeutigen Bezeichners des Tags an einen Server; Nachschlagen, durch den Server, einer Webadresse anhand des eindeutigen Bezeichners des Tags; Übermitteln der Webadresse an den Client; Übermitteln der Webadresse durch den Client an ein Abspielgerät; Anfordern, durch das Abspielgerät, von Daten, die mit der Webadresse assoziiert sind, von dem Server; und Übermitteln der Daten von dem Server an das Abspielgerät. Die Erfindung betrifft außerdem computerlesbare Medien mit darauf gespeicherten Befehlen zur Ausführung der vorgenannten Verfahren.

## Beschreibung

### TECHNISCHES GEBIET

Die hier offenbarte Erfindung liegt auf dem technischen Gebiet der Verbraucherelektronik, insbesondere dem Abspielen von Video- und/oder Audiodaten auf einem Abspielgerät.

### HINTERGRUND

Im Stand der Technik sind Tags bekannt, die von einem mobilen Gerät, etwa einem Smartphone, eingelesen werden können und eine Kennung bereitstellen. Mit dieser Kennung kann das mobile Gerät ein Medienabspielgerät ansteuern, um der Kennung zugeordnete Daten auf dem Medienabspielgerät wiederzugeben.

Ein Tag ist eine Vorrichtung zum Speichern einer Kennung. Tags können eine zur Handhabung durch einen Anwender geeignete Form aufweisen und etwa die Größe und Form einer herkömmlichen CD oder eines Bierdeckels aufweisen. Alternativ können Tags stationär und sichtbar oder unsichtbar in einem Gebäude befestigt sein. Eine Kennung kann ausgelesen werden über ein Funkprotokoll wie Near Field Communication (NFC) oder Bluetooth, oder aber über optische Übertragung; im letzten Fall kann die Kennung in Form eines QR-Codes gezeigt sein.

EP 3 793 139 A1 offenbart ein System für die Gebäudesteuerung, mit einer Mehrzahl optisch unterschiedlicher und jeweils drahtlos auslesbarer NFC-Tags, die als voneinander unabhängige Elemente beliebig miteinander kombinierbar und zueinander anordbar sind, und mit einem Endgerät, das eine NFC-Schnittstelle aufweist und dazu eingerichtet ist, eine in einem Speicher des NFC-Tags hinterlegte digitale Kennung über die NFC-Schnittstelle auszulesen, wobei das Endgerät eine Funkschnittstelle zu einem Busankoppler eines Gebäudenetzwerks und/oder zu einem Medienabspielgerät aufweist und dazu eingerichtet ist, die digitale Kennung oder einen mit der digitalen Kennung verknüpften Steuerbefehl, der vorzugsweise ein dynamischer Steuerbefehl ist, an den Busankoppler und/oder an das Medienabspielgerät zu übertragen.

EP 3 793 140 A1 offenbart eine Anordnung für die Wiedergabe von Medien in einem Gebäudenetzwerk, wobei die Anordnung ein Wiedergabegerät mit einer NFC-Schnittstelle und eine Mehrzahl drahtlos auslesbarer NFC-Tags aufweist, die jeweils einen Speicher mit einer darin hinterlegten digitalen Kennung aufweisen, wobei mindestens ein digitaler Inhalt über die digitale Kennung verknüpft ist, und wobei das Wiedergabegerät dazu eingerichtet ist, ein Ausgabegerät zur Erzeugung einer visuellen oder akustischen Ausgabe anzusteuern, den digitalen Inhalt über eine Datenverbindung zu beziehen und abzuspielen.

Der hier offenbarten Erfindung liegt die Aufgabe zugrunde, die unzulässige Weitergabe und Verwendung eines Tags durch mehrere Anwender zu erkennen. Ein Tag soll nur durch einen Anwender zurzeit verwendet werden dürfen. Zugleich soll es einem Anwender möglich sein, einen Tag an andere weiterzugeben, die dann ihrerseits den Tag als einzige verwenden dürfen.

### ZUSAMMENFASSUNG

Ausführungsformen der Erfindung umfassen Verfahren, umfassend: Einlesen, durch einen Client, eines Tags, der einen eindeutigen Bezeichner enthält; Übermitteln des eindeutigen Bezeichners des Tags an einen Server; Nachschlagen, durch den Server, einer Webadresse anhand des eindeutigen Bezeichners des Tags; Übermitteln der Webadresse an den Client; Übermitteln der Webadresse an den Client; Übermitteln der Webadresse durch den Client an ein Abspielgerät; Anfordern, durch das Abspielgerät, von Daten, die mit der Webadresse assoziiert sind, von dem Server; und Übermitteln der Daten von dem Server an das Abspielgerät.

Ausführungsformen der Erfindung umfassen ferner computerlesbare Medien mit darauf gespeicherten Befehlen, die, wenn sie von einem oder mehreren Prozessoren ausgeführt werden, eines der hier beschriebenen Verfahren ausführen.

### KURZE BESCHREIBUNG DER ZEICHNUNGEN

Figur 1 zeigt ein System aus mehreren Komponenten, die das erfindungsgemäße Verfahren ausführen.
Figur 2 zeigt ein weiteres System mit Komponenten, die ein weiteres erfindungsgemäßes Verfahren ausführen.
Figur 3 zeigt ein erfindungsgemäßes Verfahren.
Figur 4 zeigt ein weiteres erfindungsgemäßes Verfahren.

### AUSFÜHRLICHE BESCHREIBUNG

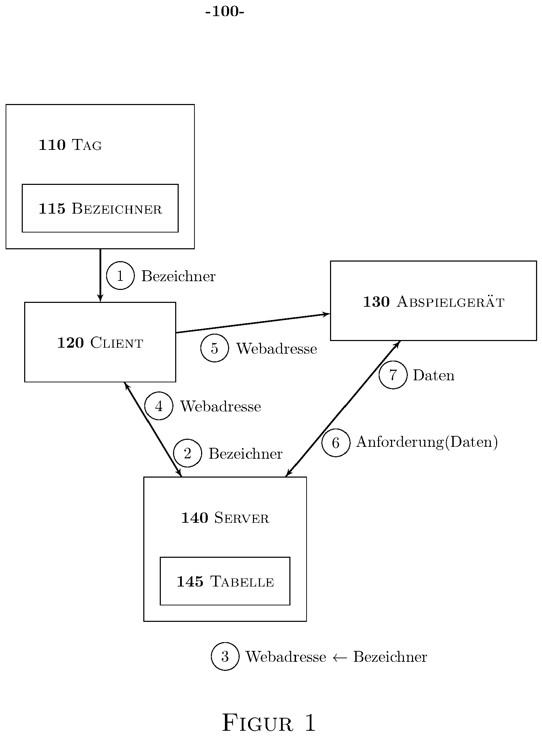

Figur 1 zeigt einen Tag 110, der einen eindeutigen Bezeichner 115 enthält. Der Tag kann ein greifbares mobiles Medium sein, etwa in Form einer CD oder eines Bierdeckels oder einer anderen für einen Anwender greifbaren Form. Der Tag kann alternativ fest installiert sein, etwa an oder in einer Wand oder einem Fenster. Der eindeutige Bezeichner 115 kann auf einem über Funk, etwa NFC oder Bluetooth, zugänglichen Chip kodiert sein, oder in einem sichtbaren QR-Code.

Figur 1 zeigt weiter einen Client 120, der eingerichtet ist, den Tag 110 zu erkennen und/oder den eindeutigen Bezeichner 115 einzulesen (Schritt 1). Der Client 120 verfügt hierzu über eine NFC- oder Bluetoothschnittstelle oder aber über eine optische Einrichtung zur Erkennung und Dekodierung eines QR-Codes. Der Client 120 ist eingerichtet, den eindeutigen Bezeichner 115 einzulesen, wenn er sich in dessen Nähe befindet und Einrichtungen zur Erkennung des eindeutigen Bezeichners 115 auf dem Client 120 aktiviert sind. Der Client 120 kann ein Smartphone oder anderes mobiles Gerät sein, einschließlich einer Fernbedienung, die speziell der Ausführung der hier offenbarten Verfahren dient.

Figur 1 zeigt außerdem einen Server 140. Der Server 140 kann im gleichen Gebäude oder in der näheren Umgebung des Clients angeordnet sein oder auch als Server in einer Cloud / im Internet stehen. Im ersten Fall kann eine Kommunikation mit dem Server ebenfalls über lokale Protokolle - NFC, Bluetooth - erfolgen. Im ersten und im zweiten Fall kann die Kommunikation über das Internet, etwa nach dem HTTP-Protokoll, erfolgen.

Der Client 120 übermittelt den von dem Tag 110 eingelesenen eindeutigen Bezeichner 115 an den Server 140 (Schritt 2). Dieser schlägt anhand des eindeutigen Bezeichners 115 eine Webadresse (Unified Ressource Locator, URL) nach, beispielsweise anhand einer Tabelle 145, die derartige Zuordnungen enthält (Schritt 3). Die Webadresse ist somit über den eindeutigen Bezeichner mit dem Tag 110 assoziiert und adressiert eine konkrete Audio- oder Videodatei. Die Webadresse kann eine im Internet gültige Adresse oder eine Adresse, die in einem lokalen Netz gültig ist, sein. Der Server 140 übermittelt die Webadresse an den Client 120 (Schritt 4), der sie wiederum an ein Abspielgerät 130 übermittelt (Schritt 5). Die Übermittlung an das Abspielgerät 130 erfolgt nicht durch den Server 140, da das konkrete Abspielgerät 130 nicht fest vorbestimmt ist, sondern durch den Client 120 ausgewählt werden kann. Beispielsweise können in der näheren Umgebung des Clients 120 mehrere Abspielgeräte 130 stehen, und ein Anwender kann sich für ein bestimmtes Abspielgerät entscheiden, indem er sich diesem nähert und der Client 120 dieses aufgrund der Nähe mittels NFC, Bluetooth oder QR-Code als erstes erkennt, oder indem er ein Abspielgerät aus einer auf dem Client 120 angezeigten Liste auswählt.

Das Abspielgerät 130 empfängt die übermittelte Webadresse. In einer Ausführungsform kann auf dem Abspielgerät 130 eine Anwendung laufen, die aus der Struktur der Webadresse erkennt, dass diese zur Weitergabe an den Server 140 geeignet ist. Beispielsweise kann diese Anwendung über eine Adresse des Servers 140 verfügen und geeignete Befehle zur Behandlung der Webadresse verfügen. Anhand dieser Befehle übermittelt das Abspielgerät 130 eine Anfrage an den Server 140 (Schritt 6). Die Anfrage enthält die Webadresse.

Das Abspielgerät 130 und der Client 120 können in einer Ausführungsform identisch sein. In diesem Fall werden die auf dem Client 120 und dem Abspielgerät 130 ausgeführten Schritte durch jeweilige Client- und Abspielprozesse durchgeführt, und Übermittlungen zwischen dem Client 120 und dem Abspielgerät 130 umfassen die Übertragung entsprechender Daten zwischen den Prozessen.

Der Server 140 empfängt die Anfrage des Abspielgeräts 130 und schlägt anhand der übermittelten Webadresse die angeforderten Daten nach, entweder im Internet oder lokal auf dem Server, und liefert diese an das Abspielgerät 130 zurück (Schritt 7). Das Abspielgerät 130 spielt die Daten ab.

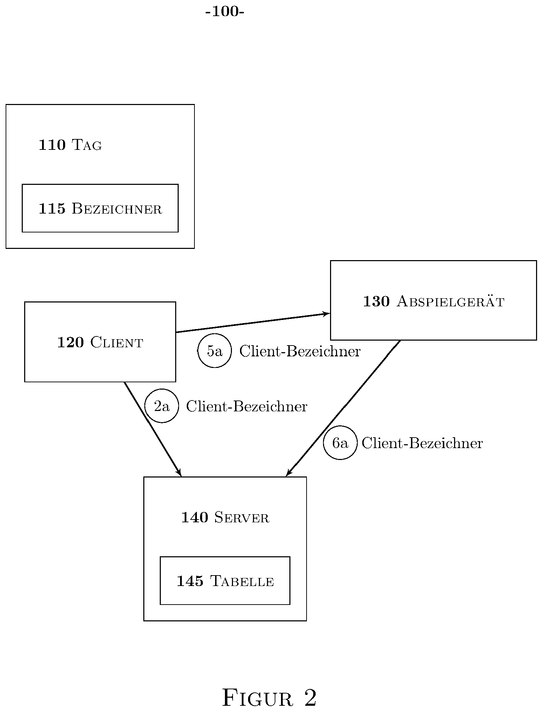

Figur 2 zeigt die gleiche Anordnung aus Tag 110, Client 120, Abspielgerät 130 und Server 140 wie Figur 1. Die in Figur 1 gezeigten Schritte 1 bis 7 werden auch durch die in Figur 2 gezeigten Einrichtungen durchgeführt. Zusätzlich werden in dieser Ausführungsform die folgenden Maßnahmen vorgenommen.

In dieser Ausführungsform liest der Client 120 wie bereits beschrieben den eindeutigen Bezeichner des Tags 110 (Schritt 1). Anschließend übermittelt der Client 120 einen eigenen eindeutigen Bezeichner an das Abspielgerät 130 (Schritt 5a) und an den Server 140 (Schritt 2a). Das Übermitteln an den Server 140 kann gemeinsam mit dem bereits beschriebenen Schritt des Übermittelns des eindeutigen Bezeichners des Tags erfolgen. Der eigene eindeutige Bezeichner des Clients 120 kann beispielsweise eine Webadresse (URL) sein, die den Client in dem lokalen Netzwerk oder auch im Internet identifiziert. Durch die Übermittlung dieses Bezeichners kündigt der Client 120 dem Abspielgerät 130 gegenüber die Wiedergabe von Daten durch das Abspielgerät 130 an.

Wie bereits im Hinblick auf die Figur 2 beschrieben, übermittelt der Client 120 den eindeutigen Bezeichner des Tags an den Server 140 (Schritt 2). In der vorliegenden Ausführungsform übermittelt der Client 120 zusätzlich den eigenen eindeutigen Bezeichner an den Server 140 (Schritt 2a). Dieser kann, wie ebenfalls beschrieben, aus dem eindeutigen Bezeichner des Tags eine entsprechende Webadresse nachschlagen (Schritt 3). Vorzugsweise speichert der Server 140 auch den eindeutigen Bezeichner des Clients 120 im Zusammenhang mit der Webadresse, beispielsweise in der Tabelle 145. Anschließend übermittelt der Server 140 die Webadresse an den Client 120 (Schritt 4), der sie an das Abspielgerät 130 weitersendet (Schritt 5). Das Abspielgerät 130 ist nunmehr im Besitz beider Bezeichner und sendet diese im Rahmen der bereits beschriebenen Anforderung an den Server 140 (Schritte 6 und 6a). Der Server 140 prüft, ob beide Bezeichner gemeinsam mit der übermittelten Webadresse gespeichert sind; die Prüfung wird vorzugsweise anhand der Tabelle 145 vorgenommen. Liegen die Bezeichner und die Webadresse in dieser Kombination vor, übermittelte der Server 140 die entsprechenden Daten an das Abspielgerät 130 (Schritt 7), wo sie wiedergegeben werden. Liegt die Kombination hingegen nicht vor, kann der Server 140 auf die Übermittlung der Daten an das Abspielgerät 130 verzichten oder andere Maßnahmen treffen, die weiter unten erläutert werden. Auf diese Weise wird der Server 140 in die Lage versetzt, Kontrolle auszuüben darüber, ob die Daten durch einen berechtigten Client angefordert wurden.

Durch die oben erläuterte Prüfung stellt der Server sicher, dass nur ein einzelner Client einen bestimmten Tag zurzeit abspielen lassen kann. In einer Ausführungsform kann das Abspielgerät den Server bei Unterbrechung oder Beendigung der Wiedergabe informieren, beispielsweise in Form einer Löschanforderung, die den eindeutigen Bezeichner des Tags und/oder des Clients enthält. Der Server löscht den oder die Einträge in der Tabelle. Greift ein anderer Client auf den Server zu, bevor eine solche Löschung durchgeführt wurde, kann dieser im Wege einer weiteren Prüfung feststellen, dass ein gleichzeitiger Zugriff auf den gleichen Tag von mehr als einem Client erfolgte, und kann diesen Zugriff verweigern oder speichern und/oder berichten. Eine derartige Prüfung umfasst demnach einen Vergleich des zuletzt angeforderten Tags beziehungsweise dessen eindeutigen Bezeichners mit den eindeutigen Bezeichnern von Tags in der Tabelle; ferner wird geprüft, ob der eindeutige Bezeichner in der Tabelle bereits mit einem anderen Client assoziiert ist. In diesem Fall greifen die vorgenannten Maßnahmen des Servers. Hingegen kann der Server mehrfachen Zugriff auf den gleichen Tag durch den gleichen Client zulassen, um die Möglichkeit zu geben, dass der gleiche Tag (von dem gleichen Client) auf mehreren Abspielgeräten zugleich abgespielt wird.

In einer Ausführungsform kann auch die Anzahl von Abspielungen eines einzelnen Tags durch einen einzelnen Client begrenzt und kontrolliert werden. Auf diese Weise kann verhindert werden, dass sich andere Clients für einen berechtigten Client ausgeben, um Zugriff auf einen Tag zu erlangen. Zugleich soll die Möglichkeit erhalten bleiben, dass ein Client einen Tag auf mehreren Abspielgeräten zugleich abspielt. Um diese Wirkungen zu erzielen, enthalten die Tags in einer Ausführungsform beschreibbare Speicher, die Zählervariablen enthalten. In dieser Ausführungsform inkrementiert (alternativ: dekrementiert) ein Client die Zählervariable auf einem Tag im Zuge eines Abspielvorgangs, also beispielsweise vor oder nach dem Übermitteln eines eindeutigen Bezeichners des Tags an einen Server. Außerdem übermittelt der Client auch den inkrementierten beziehungsweise dekrementierten Zählerwert an den Server. Dieser kann daraufhin prüfen, ob für den eindeutigen Bezeichner dieses Tags bereits ein Zählerwert gespeichert ist, der höher beziehungsweise niedriger ist als der empfangene Zähler. Dies würde darauf hindeuten, dass der Tag oder dessen Inhalt kopiert wurde und der zuletzt übermittelte Zählerwert von einem unberechtigten Client stammt. Der Server kann in diesem Fall auf die Bereitstellung der Webadresse verzichten oder anderweitige Maßnahmen, etwa eine Benachrichtigung an eine vorbestimmte Adresse, ergreifen. Ist ein bereits vorliegender Zählerwert hingegen nicht höher beziehungsweise nicht niedriger als der zuletzt empfangene Zählerwert, wird der neue Zählerwert gespeichert, beispielsweise in der bereits erläuterten Tabelle, und das Verfahren nach den zuvor erläuterten Ausführungsformen fortgesetzt.

Die hier beschriebenen Ausführungsformen sollen die Möglichkeit geben, dass ein Tag von einem Anwender an einen anderen weitergegeben wird, ohne dass dies dem Server ausdrücklich mitgeteilt werden muss. Um diese Wirkung zu erzielen, kann der Server die Häufigkeiten von Zugriffen auf Tags untersuchen.

Zu diesem Zweck kann der Server in einer Ausführungsform für jeden erhaltenen eindeutigen Bezeichner eines Tags einen aktuellen Zeitstempel speichern. Wie die bereits erwähnten Speicherungen kann auch der Zeitstempel in der bereits erläuterten Tabelle gespeichert werden. Bei Erhalt eines eindeutigen Bezeichners eines Tags kann der Server die bereits für diesen Tag gespeicherten Zeitstempel untersuchen. Diese Untersuchungen umfassen in einer Ausführungsform, einen mittleren Abstand der Abstände zwischen zuletzt gespeicherten aufeinanderfolgenden Zeitstempeln zu ermitteln. Beispielsweise können die letzten N aufeinanderfolgenden Zeitstempel untersucht werden, wobei N eine benutzerdefinierte oder herstellerseitig festgelegte natürliche Zahl ist oder auch der Gesamtzahl gespeicherter Zeitstempel für den betreffenden Tag, beispielsweise Tag 110, entspricht. Unterschreitet der mittlere Abstand einen vorbestimmten Schwellwert, also etwa einen benutzerdefinierten oder herstellerseitig festgelegten zeitlichen Mindestabstand, kann der Server auf die Übermittlung einer Webadresse verzichten und/oder über den unterschrittenen Mindestabstand berichten. Auf diese Weise können häufige Zugriffe, ob von dem gleichen Client oder unterschiedlichen Clients, unterbunden werden.

Analog zu dem Ausführungsbeispiel mit Zeitstempeln kann der Server auch die Adressen der Clients untersuchen, um etwaigen Missbrauch der Tags zu unterbinden. In dieser Ausführungsform speichert der Server bei Erhalt des eindeutigen Bezeichners des Tags von dem Client eine Internet- oder sonstige Adresse des Clients in seiner Tabelle in Kombination mit dem eindeutigen Bezeichner des Tags. In Ausführungsformen, die die Übermittlung eines eindeutigen Bezeichners des Clients an den Server umfassen, kann dieser eindeutige Bezeichner als die Adresse des Clients verwendet werden. Der Server ermittelt nun die Anzahl unterschiedlicher Adressen, die mit dem Tag bereits gespeichert wurden. Übersteigt diese Anzahl einen vorbestimmten Schwellwert, kann der Server von einer Übermittlung der Webadresse absehen oder andere Maßnahmen ergreifen. Vorzugsweise wird neben jeder Adresse auch ein aktueller Zeitstempel gespeichert, so dass der Server nicht lediglich die Anzahl unterschiedlicher Adressen, sondern vielmehr die Anzahl unterschiedlicher Adressen innerhalb eines vorgegebenen Zeitraumes bestimmen kann. Auf diese Weise wird die Möglichkeit gegeben, dass ein Tag von mehreren Clients nacheinander abgespielt werden kann; jedoch wird die Weitergabe eines Tags zwischen einer größeren Anzahl von Clients innerhalb eines kurzen Zeitraums als Indiz dafür gesehen, dass der Tag durch Unberechtigte (gleichzeitig) verwendet wird oder kopiert wurde.

In einer Ausführungsform können die hier beschriebenen Verfahren bestimmte Sicherheitsmerkmale der Tags verwenden, um diese durch den Server eindeutig identifizieren zu können.

In einer solchen Ausführungsform speichert der Tag ein Sicherheitsmerkmal, das in einer ersten Form herstellerseitig, beispielsweise als Zufallswert, erzeugt werden kann. Das Sicherheitsmerkmal kann zufällig und/oder aus bestimmten technischen Eigenschaften des Tags erzeugt worden sein, beispielsweise den Zeitpunkt von dessen Herstellung, den Zeitpunkt der erstmaligen oder letztmaligen Beschreibung des Tags mit Daten, das Gewicht des Tags und/oder die Größe der Daten auf dem Tag. Das Sicherheitsmerkmal kann durch einen Algorithmus erzeugt werden, der aus identischen Daten immer das gleiche Ergebnis erzeugt und aus unterschiedlichen Daten unterschiedliche Ergebnisse (eineindeutig). Der Algorithmus kann beispielsweise einen Verschlüsselungsalgorithmus umfassen, wobei ein Teil der Eigenschaften als Schlüssel zur Verschlüsselung der übrigen oder sämtlicher Eigenschaften verwendet wird. Der Algorithmus kann zusätzlich oder alternativ die Verwendung einer Zufallszahl umfassen.

Der Client kann das Sicherheitsmerkmal des Tags auslesen und an den Server übermitteln. Dieser vergleicht das Sicherheitsmerkmal mit einem zuvor für diesen Tag gespeicherten Sicherheitsmerkmal, soweit vorhanden. Sind die Sicherheitsmerkmale identisch, so erzeugt der Server ein neues Sicherheitsmerkmal für den Tag, beispielsweise durch Anwendung des gleichen Algorithmus`, der auch zur Erzeugung des ersten Sicherheitsmerkmals auf dem Tag verwendet wurde, oder durch einen anderen bijektiven/eineindeutigen Algorithmus, der aus einem gleichen Wert immer das gleiche Ergebnis und aus unterschiedlichen Werten unterschiedliche Ergebnisse erzielt. Der neue Tag wird vorzugsweise aus dem alten Tag erzeugt. Der Server speichert das neue Sicherheitsmerkmal für den Tag und übermittelt es an den Client, der das Sicherheitsmerkmal auf dem Tag speichert. Alternativ kann das neue Sicherheitsmerkmal durch den Client erzeugt werden, und nicht durch den Server. Vorzugsweise ersetzt das neue Sicherheitsmerkmal das alte Sicherheitsmerkmal auf dem Tag.

Weicht das an den Server übermittelte Sicherheitsmerkmal von dem dort gespeicherten Sicherheitsmerkmal ab, kann der Server Maßnahmen ergreifen, um die Verwendung des Tags zu unterbinden, beispielsweise durch Verzicht auf Ausliefern von Webadressen für diesen Tag und/oder Benachrichtigung eines Anwenders oder des Clients.

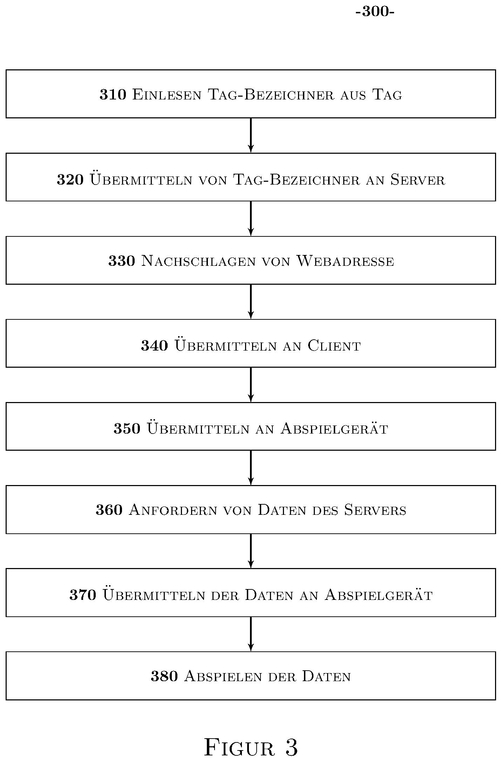

Figur 3 zeigt ein Verfahren 300 zur Durchführung der oben unter Bezugnahme auf Figur 3 erläuterten Schritte. Das Verfahren wird unter Beteiligung eines Tags, eines Clients, eines Abspielgeräts und eines Servers ausgeführt.

In Schritt 310 liest der Client einen eindeutigen Bezeichner des Tags ein und übermittelt diesen in Schritt 320 an den Server. Dieser schlägt in Schritt 330 anhand des eindeutigen Bezeichners eine Webadresse nach, etwa unter Verwendung einer lokal oder dezentral gespeicherten Tabelle.

In Schritt 340 übermittelt der Webserver die Webadresse an den Client, der sie in Schritt 350 an das Abspielgerät übermittelt. Das Abspielgerät fordert anhand der Webadresse, gegebenenfalls auch anhand des eindeutigen Bezeichners, in Schritt 160 Daten von dem Server an. Dieser kann anhand der Webadresse die betreffenden Daten identifizieren und liefert diese an das Abspielgerät aus. In einer Ausführungsform kann der Server, sofern auch der eindeutige Bezeichner übermittelt wurde, prüfen, ob die Webadresse mit der für den entsprechenden Tag des eindeutigen Bezeichners an den Client übermittelte Webadresse übereinstimmt, und kann die Übermittlung der Daten von der Übereinstimmung abhängig machen. Nach Erhalt der Daten spielt das Abspielgerät diese in Schritt 380 ab.

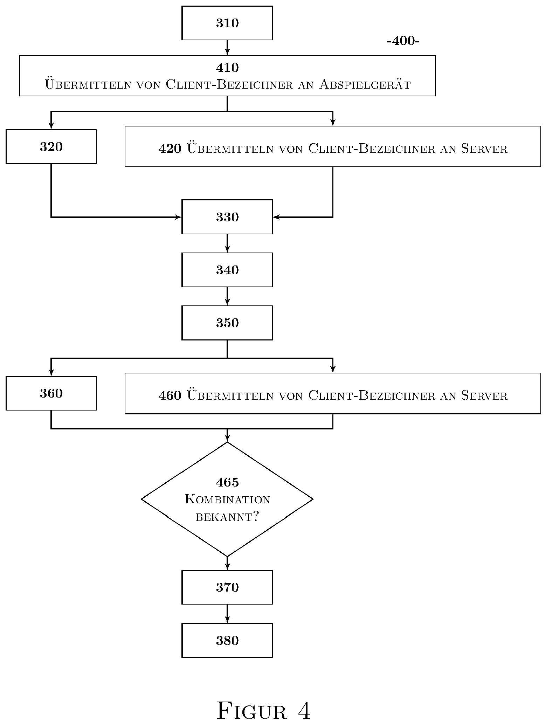

Figur 4 zeigt ein Verfahren 400, das auf dem Verfahren 300 aufbaut und die oben unter Bezugnahme auf Figur 2 offenbarten Schritte ausführt.

Zunächst liest der Client in Schritt 310 den eindeutigen Bezeichner des Tags aus. In Schritt 410 übermittelt der Client einen eigenen eindeutigen Bezeichner an das Abspielgerät, um die anstehende Benutzung des Abspielgeräts anzukündigen; dieser Schritt kann alternativ vor Schritt 310 oder auch noch innerhalb der nachfolgenden Schritte bis Schritt 350 ausgeführt werden.

Die Schritte 320, 330, 340, 350 und 360 werden analog zu den Schritten des Verfahrens 300 durchgeführt. Schritt 360 kann zusätzlich die Übermittlung des eindeutigen Bezeichners des Clients durch das Abspielgerät an den Server umfassen; diese Maßnahme ist in Figur 4 als zusätzlicher Schritt 460 gezeigt. Der Server prüft in Schritt 465, ob der von dem Abspielgerät übermittelte eindeutige Bezeichner des Clients mit dem von dem Client übermittelten eindeutigen Bezeichner (des Clients) übereinstimmt. In einer Ausführungsform kann zusätzlich die Übereinstimmung des eindeutigen Bezeichners des Tags, der sowohl von dem Client als auch von dem Abspielgerät an den Server übermittelt wurde, verglichen werden. Sind die verglichenen Daten identisch, übermittelt der Server die angeforderten Daten in Schritt 370 an das Abspielgerät. Dieses spielt die Daten in Schritt 380 ab.

In einer weiteren Ausführungsform können Tags fest mit einem Abspielgerät verbunden sein in dem Sinne, dass die durch diesen Tag definierten Daten nur mit diesem Abspielgerät wiedergegeben werden können. Diese Ausführungsform eignet sich beispielsweise für die Einrichtung von Hotelzimmern, in denen ein oder mehrere Tags ausliegen können und etwa jeweilige Fernsehsender oder auch eine Nachricht des Hotels an den Gast oder dergleichen definieren. In einer solchen Ausführungsform verfügt das Abspielgerät über einen eindeutigen Bezeichner, und der Server verfügt über eine Zuordnung eines oder mehrerer Tags zu diesem Bezeichner. Das Abspielgerät sendet bei seiner Anforderung nach Daten (Schritt 6 der Figur 1; Schritt 360 der Figur 2) zusätzlich seinen eindeutigen Bezeichner an den Server. Dieser prüft nach Erhalt des eindeutigen Bezeichners des Tags (Schritte 2 beziehungsweise 320) und nach Erhalt des eindeutigen Bezeichners des Abspielgeräts, ob diese in der Zuordnung von Tags und Bezeichner enthalten sind. Beispielsweise kann der Server anhand des eindeutigen Bezeichners des Tags einen Eintrag in einer Tabelle nachschlagen und prüfen, ob der eindeutige Bezeichner des Abspielgeräts dort enthalten ist. Die Ermittlung einer Webadresse und Herausgabe von Daten (Schritte 3 und 7 beziehungsweise 330 und 370) erfolgen lediglich, wenn der Bezeichner des Abspielgeräts vorgefunden wurde, und unterbleibt andernfalls. Auf diese Weise kann eine unzulässige Nutzung eines Tags verhindert werden; eine Verwendung des Tags mit einem anderen Abspielgerät als dem vorgesehenen Gerät führt zur Ablehnung durch den Server. Die Verwendung eines anderen Tags wird hingegen gestattet, sofern dieser nicht ebenfalls mit einem Abspielgerät verbunden ist. In einem Hotelzimmer können somit mitgebrachte Tags auf dem örtlichen Abspielgerät wiedergegeben werden, ebenso die örtlich vorhandenen Tags; diese können jedoch nicht auf anderen Abspielgeräten wiedergegeben werden, so dass einer Entwendung der Tags vorgebeugt wird. Der Ausführungsform liegt die Annahme zugrunde, dass für jegliche Wiedergaben von Tags der gleiche Server angesprochen wird.

Ausführungsformen der Erfindung umfassen auch die offenbarten Anordnungen aus Tag, Client, Server und Abspielgerät. Ferner umfassen die Ausführungsformen computerlesbare Medien mit darauf gespeicherten Befehlen, die, wenn sie durch einen oder mehrere Prozessoren ausgeführt werden, eines der hier offenbarten Verfahren ausführen. Die Ausführungsformen umfassen auch ein Computerprogrammprodukt, dass eine Implementierung der hier offenbarten Verfahren aufweist. Die offenbarten Ausführungsformen können beliebig miteinander kombiniert werden, um die jeweils erzielten technischen Wirkungen zu kombinieren.

## Patentansprüche

1. Verfahren, umfassend:
Einlesen, durch einen Client, eines Tags, der einen eindeutigen Bezeichner enthält;
Übermitteln des eindeutigen Bezeichners des Tags an einen Server;
Nachschlagen, durch den Server, einer Webadresse anhand des eindeutigen Bezeichners des Tags;
Übermitteln der Webadresse an den Client;
Übermitteln der Webadresse durch den Client an ein Abspielgerät;
Anfordern, durch das Abspielgerät, von Daten, die mit der Webadresse assoziiert sind, von dem Server; und
Übermitteln der Daten von dem Server an das Abspielgerät.

2. Verfahren nach Anspruch 1, wobei der Tag ein Near Field Communication, NFC, Tag ist.

3. Verfahren nach Anspruch 1 oder 2, ferner umfassend, nach dem Einlesen des Tags durch den Client:
Übermitteln eines eindeutigen Bezeichners des Clients an das Abspielgerät;
wobei das Übermitteln des eindeutigen Bezeichners des Tags an den Server ferner Übermitteln des eindeutigen Bezeichners des Clients an den Server umfasst;
wobei das Anfordern von Daten von dem Server durch das Abspielgerät ferner Übermitteln des eindeutigen Bezeichners des Clients an den Server umfasst; und
wobei das Übermitteln der Daten von dem Server an das Abspielgerät unter der Bedingung erfolgt, dass der von dem Abspielgerät übermittelte eindeutige Bezeichner des Clients mit dem von dem Client übermittelten eindeutigen Bezeichner des Clients übereinstimmt.

4. Verfahren nach Anspruch 3, wobei der eindeutige Bezeichner des Clients eine Webadresse ist, die den Client identifiziert.

5. Verfahren nach Anspruch 3 oder 4, ferner umfassend:
Abspielen der Daten durch das Abspielgerät; und
Löschen des eindeutigen Bezeichners des Clients für den eindeutigen Bezeichner des Tags durch den Server nach dem Abspielen der Daten.

6. Verfahren nach einem der vorstehenden Ansprüche, ferner umfassend:
Inkrementieren eines Zählers, der auf dem Tag gespeichert ist, durch den Client;
wobei der Client neben dem eindeutigen Bezeichner des Tags auch einen Wert des Zählers an den Server übermittelt, und wobei der Server bei Erhalt des Zählers prüft, ob für den Tag bereits ein Eintrag gespeichert wurde, der einen höheren Zählerwert enthält, und wobei der Server das Übermitteln der Webadresse an den Client in diesem Fall verweigert.

7. Verfahren nach einem der vorstehenden Ansprüche, ferner umfassend:
Dekrementieren eines Zählers, der auf dem Tag gespeichert ist, durch den Client;
wobei der Client neben dem eindeutigen Bezeichner des Tags auch einen Wert des Zählers an den Server übermittelt, und wobei der Server bei Erhalt des Zählers prüft, ob für den Tag bereits ein Eintrag gespeichert wurde, der einen niedrigeren Zählerwert enthält, und wobei der Server das Übermitteln der Webadresse an den Client in diesem Fall verweigert.

8. Verfahren nach einem der vorstehenden Ansprüche, ferner umfassend, nach dem Übermitteln des eindeutigen Bezeichners des Tags an den Server:
Speichern eines Zeitstempels für den eindeutigen Bezeichner des Tags; und
Ermitteln des mittleren Abstands einer vorbestimmten Anzahl aufeinanderfolgender Zeitstempel, die für den eindeutigen Bezeichner des Tags zuletzt gespeichert wurden;
wobei der Server das Übermitteln der Webadresse an den Client verweigert, wenn der mittlere Abstand einen vorbestimmten Abstand unterschreitet.

9. Verfahren nach Anspruch 8, ferner umfassend, nach dem Übermitteln des eindeutigen Bezeichners des Tags an den Server:
Speichern der aktuellen Internetadresse des Clients für den eindeutigen Bezeichner des Tags; und
Ermitteln der Anzahl unterschiedlicher Internetadressen, die für den eindeutigen Bezeichner innerhalb eines vorbestimmten Zeitraums oder für eine Anzahl von Zugriffen zuletzt verwendet wurden;
wobei der Server das Übermitteln der Webadresse an den Client verweigert, wenn die Anzahl unterschiedlicher Internetadressen einen vorbestimmten Wert übersteigt.

10. Verfahren nach Anspruch 9, wobei das Ermitteln der Anzahl unterschiedlicher Internetadressen umfasst, jede Änderung zwischen Internetadressen aufeinanderfolgender Zugriffe auf den Bezeichner als unterschiedliche Internetadresse zu zählen.

11. Verfahren nach einem der vorstehenden Ansprüche, ferner umfassend:
Einlesen, durch den Client, eines Sicherheitsmerkmals des Tags; und
Übermitteln des Sicherheitsmerkmals des Tags an den Server;
wobei der Server das Sicherheitsmerkmal des Tags mit einem zuvor auf dem Server für diesen Tag gespeichertes Sicherheitsmerkmal vergleicht und, falls das übermittelte Sicherheitsmerkmal von dem gespeicherten Sicherheitsmerkmal abweicht, weitere Zugriffe auf den Tag über den Server verweigert, wobei der Server ein neues Sicherheitsmerkmal für den Tag erzeugt und dieses durch den Client auf den Tag schreiben lässt, falls das übermittelte Sicherheitsmerkmal mit dem gespeicherten Sicherheitsmerkmal identisch ist.

12. Verfahren nach Anspruch 11, wobei das Erzeugen des neuen Sicherheitsmerkmals durch den Server umfasst, dieses aus dem übermittelten Sicherheitsmerkmal zu erzeugen durch Anwendung eines reproduzierbaren Algorithmus', insbesondere eines Verschlüsselungsalgorithmus.

13. Verfahren nach Anspruch 11 oder 12, wobei der Tag bei seiner Auslieferung ein erstes Sicherheitsmerkmal aufweist, das zufällig gewählt ist und/oder technische Eigenschaften des Tags enthält, insbesondere den Zeitpunkt der Herstellung, den Zeitpunkt der letztmaligen oder erstmaligen Beschreibung des Tags mit Daten, des Gewichts und/oder der Größe der Daten auf dem Tag.

14. Verfahren nach einem der vorstehenden Ansprüche, wobei der Client und das Abspielgerät identisch sind.

15. Verfahren nach einem der vorstehenden Ansprüche, wobei das Anfordern von Daten durch das Abspielgerät umfasst, einen eindeutigen Bezeichner des Abspielgeräts an den Server zu senden, und wobei der Server prüft, ob der eindeutige Bezeichner des Tags dem eindeutigen Bezeichner des Abspielgeräts zugeordnet ist, und das Übermitteln der Daten an das Abspielgerät lediglich erfolgt, wenn die Zuordnung vorliegt oder dem eindeutigen Bezeichner des Tags überhaupt kein Bezeichner eines Abspielgeräts zugeordnet ist.

16. Computerlesbares Medium mit darauf gespeicherten Befehlen, die, wenn sie von einem Prozessor ausgeführt werden, das Verfahren nach einem der vorstehenden Ansprüche ausführen.

## Geänderte Patentansprüche

### Geänderte Patentansprüche gemäss Regel 137(2) EPÜ.

1. Verfahren (300), umfassend:
Einlesen (310), durch einen Client, eines Tags, der einen eindeutigen Bezeichner enthält;
Übermitteln (320) des eindeutigen Bezeichners des Tags an einen Server;
Nachschlagen (330), durch den Server, einer Webadresse anhand des eindeutigen Bezeichners des Tags;
Übermitteln (340) der Webadresse an den Client;
Übermitteln (350) der Webadresse durch den Client an ein Abspielgerät, das sich in der Umgebung des Clients befindet und mit diesem nicht identisch ist;
Anfordern (360), durch das Abspielgerät, von Daten, die mit der Webadresse assoziiert sind, von dem Server; und
Übermitteln (370) der Daten von dem Server an das Abspielgerät.

2. Verfahren (300) nach Anspruch 1, wobei der Tag ein Near Field Communication, NFC, Tag ist.

3. Verfahren (300) nach Anspruch 1 oder 2, ferner umfassend, nach dem Einlesen (310) des Tags durch den Client:
Übermitteln eines eindeutigen Bezeichners des Clients an das Abspielgerät;
wobei das Übermitteln des eindeutigen Bezeichners des Tags an den Server ferner Übermitteln des eindeutigen Bezeichners des Clients an den Server umfasst;
wobei das Anfordern von Daten von dem Server durch das Abspielgerät ferner Übermitteln des eindeutigen Bezeichners des Clients an den Server umfasst; und
wobei das Übermitteln der Daten von dem Server an das Abspielgerät unter der Bedingung erfolgt, dass der von dem Abspielgerät übermittelte eindeutige Bezeichner des Clients mit dem von dem Client übermittelten eindeutigen Bezeichner des Clients übereinstimmt.

4. Verfahren (300) nach Anspruch 3, wobei der eindeutige Bezeichner des Clients eine Webadresse ist, die den Client identifiziert.

5. Verfahren (300) nach Anspruch 3 oder 4, ferner umfassend:
Abspielen (380) der Daten durch das Abspielgerät; und
Löschen des eindeutigen Bezeichners des Clients für den eindeutigen Bezeichner des Tags durch den Server nach dem Abspielen der Daten.

6. Verfahren (300) nach einem der vorstehenden Ansprüche, ferner umfassend:
Inkrementieren eines Zählers, der auf dem Tag gespeichert ist, durch den Client;
wobei der Client neben dem eindeutigen Bezeichner des Tags auch einen Wert des Zählers an den Server übermittelt, und wobei der Server bei Erhalt des Zählers prüft, ob für den Tag bereits ein Eintrag gespeichert wurde, der einen höheren Zählerwert enthält, und wobei der Server das Übermitteln der Webadresse an den Client in diesem Fall verweigert.

7. Verfahren (300) nach einem der vorstehenden Ansprüche, ferner umfassend:
Dekrementieren eines Zählers, der auf dem Tag gespeichert ist, durch den Client;
wobei der Client neben dem eindeutigen Bezeichner des Tags auch einen Wert des Zählers an den Server übermittelt, und wobei der Server bei Erhalt des Zählers prüft, ob für den Tag bereits ein Eintrag gespeichert wurde, der einen niedrigeren Zählerwert enthält, und wobei der Server das Übermitteln der Webadresse an den Client in diesem Fall verweigert.

8. Verfahren (300) nach einem der vorstehenden Ansprüche, ferner umfassend, nach dem Übermitteln (320) des eindeutigen Bezeichners des Tags an den Server:
Speichern eines Zeitstempels für den eindeutigen Bezeichner des Tags; und
Ermitteln des mittleren Abstands einer vorbestimmten Anzahl aufeinanderfolgender Zeitstempel, die für den eindeutigen Bezeichner des Tags zuletzt gespeichert wurden;
wobei der Server das Übermitteln der Webadresse an den Client verweigert, wenn der mittlere Abstand einen vorbestimmten Abstand unterschreitet.

9. Verfahren (300) nach Anspruch 8, ferner umfassend, nach dem Übermitteln (320) des eindeutigen Bezeichners des Tags an den Server:
Speichern der aktuellen Internetadresse des Clients für den eindeutigen Bezeichner des Tags; und
Ermitteln der Anzahl unterschiedlicher Internetadressen, die für den eindeutigen Bezeichner innerhalb eines vorbestimmten Zeitraums oder für eine Anzahl von Zugriffen zuletzt verwendet wurden;
wobei der Server das Übermitteln der Webadresse an den Client verweigert, wenn die Anzahl unterschiedlicher Internetadressen einen vorbestimmten Wert übersteigt.

10. Verfahren (300) nach Anspruch 9, wobei das Ermitteln der Anzahl unterschiedlicher Internetadressen umfasst, jede Änderung zwischen Internetadressen aufeinanderfolgender Zugriffe auf den Bezeichner als unterschiedliche Internetadresse zu zählen.

11. Verfahren (300) nach einem der vorstehenden Ansprüche, ferner umfassend:
Einlesen, durch den Client, eines Sicherheitsmerkmals des Tags; und
Übermitteln des Sicherheitsmerkmals des Tags an den Server;
wobei der Server das Sicherheitsmerkmal des Tags mit einem zuvor auf dem Server für diesen Tag gespeichertes Sicherheitsmerkmal vergleicht und, falls das übermittelte Sicherheitsmerkmal von dem gespeicherten Sicherheitsmerkmal abweicht, weitere Zugriffe auf den Tag über den Server verweigert, wobei der Server ein neues Sicherheitsmerkmal für den Tag erzeugt und dieses durch den Client auf den Tag schreiben lässt, falls das übermittelte Sicherheitsmerkmal mit dem gespeicherten Sicherheitsmerkmal identisch ist.

12. Verfahren (300) nach Anspruch 11, wobei das Erzeugen des neuen Sicherheitsmerkmals durch den Server umfasst, dieses aus dem übermittelten Sicherheitsmerkmal zu erzeugen durch Anwendung eines reproduzierbaren Algorithmus', insbesondere eines Verschlüsselungsalgorithmus.

13. Verfahren (300) nach Anspruch 11 oder 12, wobei der Tag bei seiner Auslieferung ein erstes Sicherheitsmerkmal aufweist, das zufällig gewählt ist und/oder technische Eigenschaften des Tags enthält, insbesondere den Zeitpunkt der Herstellung, den Zeitpunkt der letztmaligen oder erstmaligen Beschreibung des Tags mit Daten, des Gewichts und/oder der Größe der Daten auf dem Tag.

14. Verfahren (300) nach einem der vorstehenden Ansprüche, wobei das Anfordern (360) von Daten durch das Abspielgerät umfasst, einen eindeutigen Bezeichner des Abspielgeräts an den Server zu senden, und wobei der Server prüft, ob der eindeutige Bezeichner des Tags dem eindeutigen Bezeichner des Abspielgeräts zugeordnet ist, und das Übermitteln der Daten an das Abspielgerät lediglich erfolgt, wenn die Zuordnung vorliegt oder dem eindeutigen Bezeichner des Tags überhaupt kein Bezeichner eines Abspielgeräts zugeordnet ist.

15. Computerlesbares Medium mit darauf gespeicherten Befehlen, die, wenn sie von einem Prozessor ausgeführt werden, das Verfahren nach einem der vorstehenden Ansprüche ausführen.
